Europäisches Patentamt

(19) European Patent Office

Office européen des brevets

(11) Publication number: **0 018 228**
**B1**

# (12) EUROPEAN PATENT SPECIFICATION

(45) Date of publication of patent specification: **30.03.83**

(51) Int. Cl.³: **B 60 T 13/22**

(21) Application number: **80301276.4**

(22) Date of filing: **21.04.80**

(54) Tractor/trailer braking systems with reserve spring braking and parking.

(30) Priority: **19.04.79 GB 7913597**

(43) Date of publication of application:
**29.10.80 Bulletin 80/22**

(45) Publication of the grant of the patent:
**30.03.83 Bulletin 83/13**

(84) Designated Contracting States:
**DE FR GB IT SE**

(56) References cited:
**DE - B - 1 274 903**
**DE - B - 2 051 004**
**DE - B - 2 243 472**

(73) Proprietor: **CLAYTON DEWANDRE COMPANY LIMITED**
**P.O. Box 9 Titanic Works**
**Lincoln, LN5 7JL (GB)**

(72) Inventor: **Page, Wilbur Mills**
**48 Jensen Road**
**Bracebridge Heath Lincoln (GB)**

(74) Representative: **Hartley, David et al,**
**c/o Withers & Rogers 4 Dyer's Buildings Holborn**
**London, EC1N 2JT (GB)**

Courier Press, Leamington Spa, England

Tractor/trailer braking systems with reserve spring braking and parking.

This invention relates to full power closed centre hydraulic braking systems for automotive vehicle trailer combinations and especially tractor/semi-trailer combinations.

One kind of system which has been proposed includes both service and emergency line connections between the tractor and the trailer, each with its associated return line, the emergency line providing a constant supply of hydraulic fluid from the vehicle through a relay valve on the trailer to a trailer-mounted storage unit or accumulator, and a service line which when activated by the foot or hand control on the tractor, actuates the relay to deliver pressure fluid from the accumulator to the trailer service brakes.

Although full power hydraulic braking systems have been used for some considerable time on rigid vehicles, both private and commercial, the system has not been widely used for articulated combinations. This is for several reasons not least among which is the problem of connecting and disconnecting the two systems, the inclusion of return lines (which are not required on air systems) and the ability of the system to take care of internal leaks without pressurising the return lines and thence the coupling interface on the trailer when it is disconnected from the tractor. The greatest inhibiting factor, however, which is fundamental to all hydraulic systems is that the reservoir fluid volume is limited. Air systems on the other hand have unlimited atmosphere to draw on and for example, a single energy source (compressor) can pump against multi-system protection valves thus ensuring continual charging of an unfailed circuit. This "overflow" technique cannot be applied to hydraulics and a serious system leak on the trailer could empty the tractor fluid reservoir in a few minutes, leaving only limited stored energy for braking. However, in order to overcome this deficiency the tractor system could be fitted with a triple element pump, that is one element for each of the tractor axles (or circuits) and the third element for the trailer.

This invention arose during design of a trailer system which can be coupled to such a tractor system or to a conventional power system embodying a dual storage reservoir, dual hydraulic pump, dual brake valve which appllies the front and rear brakes of the tractor as separate circuits and a pressure storage circuit for the parking brake which may be energised via a non-return valve by the pump element supplying the front axle circuit, whilst the rear axle brake circuit together with pressure storage for the relay valves controlling the trailer brake can be energised by second element of the pump.

When the tractor brakes are applied, trigger lines from the two axle circuits are simultaneously pressurised to operate a dual relay valve in a modulated manner to operate the trailer brakes.

In the case of an accidental parting of any tractor and trailer in service the trailer brakes must be applied automatically, this being triggered by either the disruption of the emergency (supply) line between tractor and trailer or by a disconnection of the emergency coupling. It is also desirable for the tractor system to be arranged such that a failure in the parking circuit energy source destroys pressure in the trailer emergency line thus applying the trailer brakes.

It is an object of this invention to provide residual braking in full power hydraulic braking systems for vehicle/trailer combinations.

According to this invention we propose a full power closed centre hydraulic braking system for a vehicle trailer combination, comprising service and emergency line connections between the towing vehicle and the trailer each with its associated return line, the emergency line providing a constant supply of hydraulic fluid from the towing vehicle through an emergency relay valve on the trailer, to a trailer mounted storage unit or accumulator, the emergency relay valve being adapted to deliver pressure fluid from the accumulator to the trailer service brake actuators when the service line is activated by a control on the vehicle or in the event of a loss of pressure on the service line, characterised in that the system further comprises trailer spring brake actuators connected to the accumulator such that in the event of a loss of pressure at the accumulator the spring brakes are applied and in that the accumulator is connected to the spring brake actuators via a park valve which is open except when set to a park position so isolating the accumulator and venting the spring brake actuators to the return line.

Emergency braking, in the event of loss of service line pressure, is achieved in the conventional manner via the accumulator and emergency relay valve. In addition, however, secondary braking is available following loss of accumulator pressure, by means of the spring brake activators which are also used for parking so overcoming the problems associated with purely hydraulic or pneumatic systems in which it is necessary to park on the hydraulic fluid or air pressure from the towing vehicle.

Conveniently, the relay emergency valve is connected to the emergency line via a changeover valve also connected to a manoeuvring valve and biased so as to communicate between emergency relay valve and the manoeuvring valve in the absence of emergency line pressure, the manoeuvring valve being operable to direct accumulator pressure via the open park valve and the changeover valve to the relay emergency valve, in response to which the relay emergency valve acts to exhaust the service brake actuators so releasing the service brakes.

An embodiment of this invention will now be described by way of example, with reference to the accompanying drawings of which:—

Figure 1 is a diagram of a trailer braking system including a reserve spring brake circuit; and

Figure 2 is a cross-section of a relay emergency valve shown in Figure 1.

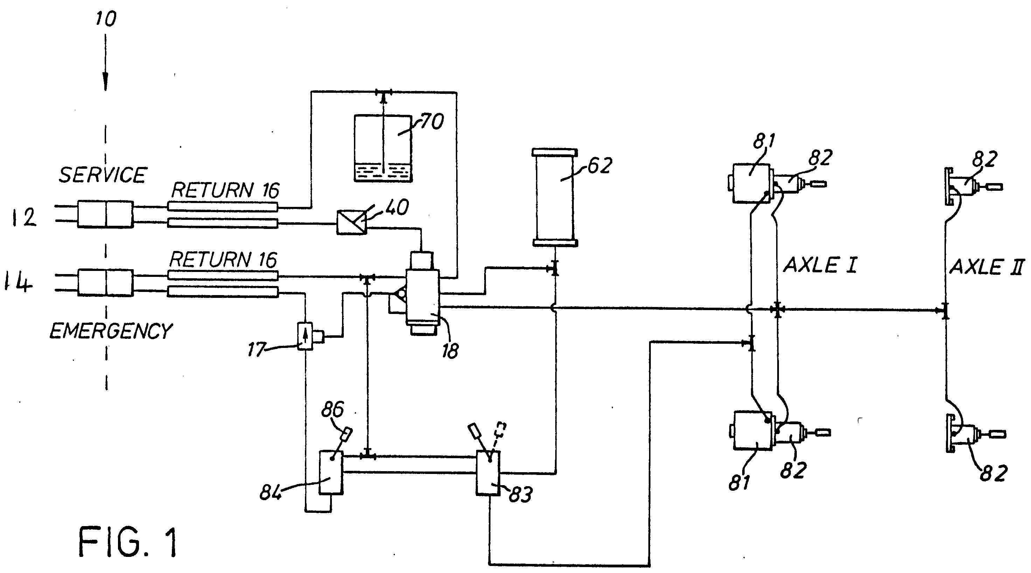

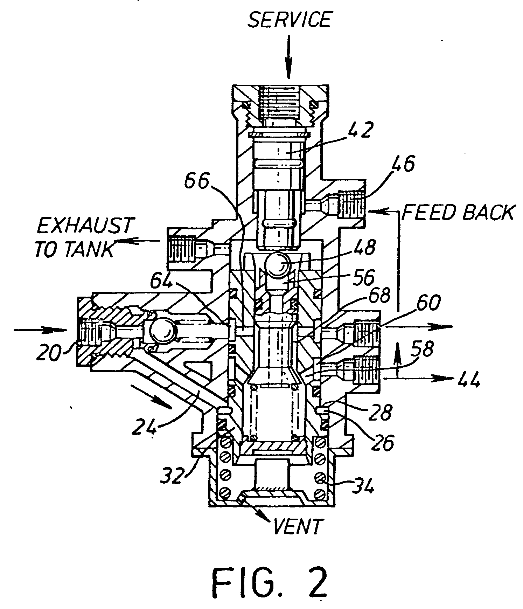

The trailer braking system shown in Figure 1 is connected to the trailer braking system by a coupling 10 which may be of the kind described in our British Patent Specification 2,008,217 and includes a Service line 12, an emergency line 14 and associated return lines 16. Connected via a changeover valve 17 biased in the direction indicated, to the Emergency line 14, is an emergency relay valve 18 (Figure 2) having in the inlet port 20 a spring-loaded ball-type non-return valve and a by-pass drilling 24 leading to an annular chamber 26 defined between the valve housing 28 and the shoulder of a floating spool 32 which is biased upwardly by a control spring 34.

The service line is connected via load sensing valve 40 to the control port and piston 42 of the relay emergency valve. Delivery port 44 as well as supplying pressure to the actuators is also connected to port 46 to supply a balance feedback pressure to the plunger 42, to control firstly the movement of the steel ball exhaust valve in relation to its conical seat at the upper end of valve plunger 56 and secondly the movement of plunger 56 relative to valve sleeve 32. At its lower end, the plunger 56 has a conical valve portion which seats on an upwardly converging conical seat formed internally of the spool just above drillings 58 communicating with the delivery port 44 via an annular groove 60.

As shown in Figure 2, an accumulator 62 is connected to the emergency line pressure through the non-return valve 22 and via an external groove 64 around the spool 32, the groove 64 being linked by drillings 66 with a chamber 68 defined by a recess in the plunger 56.

With the vehicles coupled and the tractor engine running both tractor and trailer systems are charged simultaneously. The trailer accumulator is charged by the emergency line via the changeover valve 17 and relay emergency valve 18. During initial charging the relay emergency valve 18 connects the accumulator 62 to the service brake actuators 82 thus applying the trailer brakes. With the trailer PARK valve in the park position the Spring Brake chambers 81 are exhausted to atmosphere and the spring brakes are applied.

Full compounding of Service Actuator and Spring brake effort is avoided by the action of service pressure on the exposed surface of the spring brake piston.

When a predetermined pressure has been reached (usually co-incident with the low pressure warning switch setting pressure) the spool valve or sleeve 32 is moved upwards to stop position on the body, taking the valve 18 out of the emergency mode by closing off the accumulator connection to the actuators delivery port 44 and allowing actuator fluid to exhaust through valve 48 to the expansion chamber 70 and service return line 16. The accumulator 62 continues to be charged via the emergency line 14 until pump "cut-out" pressure is reached on the tractor.

When the driver applies the tractor foot brake the trailer service control line 12 is energised in the conventional way and the relay emergency valve 18 operates in its simple relay valve mode dispensing fluid from the accumulator 62 on the trailer to operate the service actuators 82 on both axle I and axle II.

Automatic Braking is effected in the event of trailer breakaway when either the emergency line 14 between tractor and trailer is disrupted or when the emergency coupling 10 is disconnected. When pressure is dumped from the emergency line 14 in the relay emergency valve spring 34 moves the valve spool into the emergency mode thus connecting the accumulator 62 to the service brake actuators 82 and applying the trailer brakes.

Should the trailer accumulator 62 inadvertently lose its pressure the spring brakes will automatically apply.

Prior to uncoupling the trailer the park valve 83 is moved to the Park position isolating the accumulator 62 and venting the spring brake chambers to the return line 16 thus applying the spring brakes. This actuation can be carried out with the trailer coupled and uncoupled providing the trailer accumulator 62 is charged.

Manoeuvring of a disconnected, unparked trailer is achieved by diverting by means of a manoeuvring valve 84 pressure from the accumulator 62 to the relay emergency valve chamber 68 via a changeover valve 17 to take the relay emergency valve 'out of emergency' and exhaust the service brake actuators to the expansion chamber 70 thus releasing the brakes. Manual effort must be maintained on the valve operating lever 86 to hold off the brakes. When the valve lever 86 is released the valve 84 automatically returns to the 'OFF' position thus allowing the brakes to be reapplied via the relay emergency valve 18. Operation of the park valve 83 puts the spring brakes in the parking mode but compounding of spring effort is cancelled by service pressure acting on the exposed face of the spring brake piston. Should accumulator pressure fail, spring effort automatically takes over to keep the brakes applied.

Our copending European Patent Application EP—A—0018227 describes a tractor/trailer braking system with spring brake emergency braking and parking and our copending European Patent Application EP—A—0018229 describes another tractor/trailer braking system with residual (secondary) braking.

## Claims

1. A full power closed centre hydraulic braking system for a vehicle/trailer combination, comprising service and emergency line connections (12, 14) between the vehicle and the trailer each with its associated return line (16), the emergency line (14) providing a constant supply of hydraulic fluid from the vehicle through an emergency relay valve (18) on the trailer, to a trailer mounted storage unit or accumulator (62), the emergency relay valve (18) being adapted to deliver pressure fluid from the accumulator (62) to the trailer service brake actuators (82) when the service line (12) is activated by a control on the vehicle or in the event of a loss of pressure on the service line, characterised in that the system further comprises trailer spring brake actuators (81) connected to the accumulator (62) such that in the event of a loss of pressure at the accumulator the spring brakes are applied and in that the accumulator (62) is connected to the spring brake actuators (81) via a park valve (83) which is open except when set to a park position so isolating the accumulator (82) and venting the spring brake actuators (81) to the return line.

2. A braking system according to claim 1 wherein the relay emergency valve (18) is connected to the emergency line via a changeover valve (17) also connected to a manoeuvring valve (84) and biased so as to communicate between emergency relay valve (18) and the manoeuvring valve (84) in the absence of emergency line pressure, the manoeuvring valve (84) being operable to direct accumulator pressure via the open park valve (83) and the changeover valve (17) to the relay emergency valve (18), in response to which the relay emergency valve acts to exhaust the service brake actuators (81) so releasing the service brakes (82).

## Revendications

1. Un système de freinage à pleine puissance hydraulique à centre fermé pour une combinaison véhicule/remorque comprenant des conduites de connexion (12, 14) de service et de secours entre le véhicule et la remorque, chacune comprenant sa conduite de retour associée (16), la conduite (14) de secours assurant une alimentation constante de fluide hydraulique provenant du véhicule à travers une soupape relais de secours (18) placée sur la remorque, en direction d'un accumulateur (62) ou unité de stockage montée sur la remorque, la soupape (18) relais de secours étant adaptée de façon à délivrer un fluide sous pression à partir de l'accumulateur (62) vers les organes d'actionnement (82) des freins de service de la remorque, lorsque la conduite de service (12) est actionnée par une commande placée sur le véhicule ou dans le cas d'une perte de pression sur la conduite de service, caractérisé en ce que le système comprend en outre des organes d'actionnement (81) de freins a ressorts de la remorque connectés à l'accumulateur (62) de façon que dans le cas d'une perte de pression à l'accumulateur, les freins à ressorts soient appliqués et en ce que l'accumulateur (62) est connecté aux organes d'actionnement (81) des freins à ressorts via une soupape de stationnement (83), laquelle est ouverte sauf lorsqu'elle est placée dans la position de stationnement isolant alors l'accumulateur (62) et déchargeant les organes d'actionnement (81) des freins à ressorts vers la conduite de retour.

2. Un système de freinage selon la revendication 1, dans lequel la soupape de secours relais (18) est relié à la conduite de secours via une soupape de commutation (17) également reliée à une soupape de manoeuvre (84) et sollicitée de façon à faire communiquer la soupape (18) relais de secours et la soupape (84) de manoeuvre en l'absence de pression dans la conduite de secours, la soupape de manoeuvre (84) étant actionnable de façon à diriger la pression de l'accumulateur via la soupape (83) ouverte de stationnement et la soupape de commutation (17) en direction de la soupape relais de secours (18), en réponse à quoi, la soupape de secours relais agit de façon à décharger les organes d'actionnement des freins de service (81) de façon à relacher les freins de service (82).

## Patentansprüche

1. Hydraulisches mit konstantem Druck arbeitendes Bremssystem für Fahrzeig-Anhänger-Kombinationen mit Betriebsund Notleitungsverbindungen (12, 14) zwischen dem Fahrzeug und dem Anhänger mit jeweils zugeordneter Rücklaufleitung (16), wobei die Notleitung (14) für eine konstante Hydraulikfluidzufuhr vom Fahrzeug über ein Notsteuerventil (18) am Anhänger zu einem Speicher (62) oder einer Speichereinheit sorgt, der am Anhänger angebracht ist, und wobei das Notsteuerventil (18) dafür eingerichtet ist, Druckfluid vom Speicher (62) zu den Betätigungseinrichtungen (82) der Betriebsbremsen des Anhängers zu liefern, wenn die Betriebsleitung (12) durch eine fahrzeugseitige Steuerung oder im Falle eines Druckverlusts in der Betriebsleitung aktiviert wird, dadurch gekennzeichnet, daß das System weiterhin anhängerseitige Federspeicher-Bremsbetätigungseinrichtungen (81) aufweist, die mit dem Speicher (62) so verbunden sind, daß bei einem Druckverlust am Speicher die Federspeicherbremsen angelegt werden, und daß der Speicher (62) mit den Federspeicher-Bremsbetätigungseinrichtungen (81) über ein Parkventil (83) verbunden ist, das offen ist, es sei denn, es ist auf die Parkstellung eingestellt, so daß der Speicher (62) abgetrennt und die

Federspeicher-Bremsbetätigungseinrichtungen (81) zur Rücklaufleitung entlüftet werden.

2. Bremssystem nach Anspruch 1, bei welchem das Notsteuerventil (18) mit der Notleitung über ein Umschaltventil (17) sowie mit einem Stellventil (84) verbunden und so vorgespannt ist, daß eine Verbindung zwischen dem Notsteuerventil (18) und dem Stellventil (84) bei fehlendem Notleitungsdruck besteht, wobei das Stellventil (84) so betätigbar ist, daß Speicherdruck über das offene Parkventil (83) und das Umschaltventil (17) zum Notsteuerventil (18) geführt wird, welches darauf ansprechend so wirkt, daß die Betätigungseinrichtungen (82) der Betriebsbremsen entleert werden, wodurch die Betriebsbremsen freigegeben werden.

FIG. 1

SERVICE

RETURN 16

12

RETURN 16

14

EMERGENCY

70

62

40

17

18

81

82

82

AXLE I

AXLE II

86

84

83

81

82

82

SERVICE

42

66

46

EXHAUST
TO TANK

FEED BACK

48

64

56

68

60

20

58

44

24

28

26

32

34

VENT

FIG. 2